# EUROPEAN PATENT APPLICATION

(11) **EP 1 858 188 A2**
(43) Date of publication of application: **21.11.2007**
(21) Application number: 07108161.6
(22) Date of filing: 18.11.1999
(51) Int. Cl.: H04L 1/00, H04L 12/56, H04Q 7/22

(54) **Data Packet Multi-Access Communicating Method and Transmitting and Receiving Apparatus Therefor**

(30) Priority: 20.11.1998 JP 33061098
(62) Divisional of application: 99122093.0
(71) Applicant: NEC CORPORATION, Minato-ku, Tokyo 108-8001 (JP)
(72) Inventor: Ando Takeshi, 7-1, Shiba 5 chome, Minato-ku, Tokyo (JP)
(74) Representative: Vossius & Partner

(57) **Abstract**

A data packet multi-access communicating method and a transmitting and receiving apparatus therefor of the present invention comprise maximum rate controlling means on a mobile station side, and comprise means for extracting maximum rate control setting information out of control signals received from a base station, and the maximum rate setting information is determined by taking account of transmission condition, a demanded transmission rate and so forth of each mobile station when a base station side grasps propagation situation in which each mobile station is placed, and coding means capable of variably controlling a transmission rate in accordance with maximum rate control, and data bus switching means for controlling the input are provided, and means for inserting a continuous data content into an information header section of a transmission signal on the mobile station side is provided for demanding the continuous data content to the base station side, in case of sending a continuous data. Means for determining transmission power corresponding to a maximum rate and setting it in a modulation device is provided.

## Description

The present invention relates to a variable rate communicating method and an apparatus therefor, and especially to a data packet multi-access communicating method and a transmitting and receiving apparatus therefor in a mobile communicating system (a cellular system) using a code division multiple access (CDMA) method in which a plurality of mobile stations try to have access to a base station at arbitrary timing using a common channel.

In a mobile communicating system using a conventional CDMA, a number of mobile stations communicate with a base station at random through the same frequency band in channels in an upward direction.

Also in a CDMA method in which each channel is multiplexed and isolated by means of orthogonality of a code, if the number of channels to which access is concurrently conducted increases, interference between the mutual channels increases.

Also, as a mobile communicating service in a future, from the current service being mainly composed of voice, realization of a multimedia service is expected, in which voice, an image and other data communication mixedly exist.

There is packet data transmission as such a data transmission method.

Conventionally, as a technology for improving throughput of the packet data transmission, there is reservation type access control, and a multi-access method is proposed in JP-A-233051/1997 (a prior art 1, hereinafter), in which the reservation type access control is used in scheduling of packet transmission in the CDMA mobile communicating system.

This is proposed as a multi-access method for reducing a probability of collision of the packet, in which a mobile station having a data transmission demand makes a reservation of a transmission channel in a base station by means of a control packet for reservation, and the base station notifies transmission timing of a data to be transmitted of each terminal.

Also, in JP-A-55693/1997 (a prior art 2, hereinafter), an access method for improving reduction of throughput due to collision of a control packet for reservation in reservation type access control is proposed in case that a time slot is defined for a transmission channel, and random access of a control packet is permitted for making a reservation of a channel.

The first task is that, in case of realizing data packet transmission by means of random access in a channel in an upward direction of the mobile communication cellular system using the CDMA, if each mobile station conducts transmission at random by means of maximum rate access, due to concentration of the maximum rate access, a probability of collision of a packet increases, and concentrated condition of traffic becomes to be reached.

The reason thereof is that, even in a region where the voice service communication attaches importance to real time characteristic and some error can be accepted, the packet data communication attaches importance to transmission quality, and as long as there is increase of interference due to concentration of traffic, that is to say, as long as there is an error of an erroneous information signal on a reception side due to deterioration of transmission quality, it become to be necessary to conduct transmission again and resend information for maintaining transmission quality, and resending of the same signal is repeated a plurality of times.

The second task is that, since in both reservation type access methods proposed in the prior arts 1 and 2, the time slot is defined for the transmission channel, flexibility of the communication service lowers, and it is difficult to realize the data packet transmission by means of the random access.

The reason thereof is that both the control channel for reservation and the transmission channel become to be asynchronous with each other, and in case that transmission timing cannot be designated, it cannot be an effective solution.

The objective of the present invention is to provide a data packet multi-access communicating method and a transmitting and receiving apparatus therefor, for reducing a collision packet due to dispersion of maximum rate access of a channel in a random access upward direction in a CDMA mobile communication cellular system which provides a variable rate packet data transmission service.

In the present invention, to provide the data packet multi-access communicating method and an transmitting and receiving apparatus therefor,
first, in case of transmitting continuous data in large quantities, a mobile station notifies a base station of a data size to be transmitted in advance, and issues a utilization demand of a maximum rate to the base station, and variably changes a transmission rate within a limitation of the maximum rate indicated by the base station, and optimum communication is conducted in accordance with the maximum rate indicated by the base station.

Second, a base station grasps a transmission demand from each mobile station, and determines a maximum rate at that time by taking account of radio wave propagation condition under which each mobile station is presently situated and a priority order and so forth, and notifies each mobile station of it, and optimum communication is conducted.

Third, in case of transmitting continuous data in large quantities, the mobile station notifies the base station of a data size to be transmitted in advance, and issues a utilization demand of a maximum rate to the base station, and the base station grasps a transmission demand from each mobile station, and determines a maximum rate at that time by taking account of radio wave propagation condition under which each mobile station is presently situated and a priority order and so forth, and notifies each mobile station of it, and each mobile station variably changes a transmission rate within a limitation of the maximum rate indicated by the base station, and optimum communication is conducted in accordance with the maximum rate determined by the base station.

Fourth, in the receiving and transmitting apparatus comprising variable rate communication path coding means for coding an information signal at a transmission rate in accordance with an information content, and modulation means for modulating a signal at transmission power in accordance with the above-described transmission rate,
maximum rate controlling means is provided for controlling a maximum value of the transmission rate to the above-described variable rate communication path coding means, in accordance with maximum rate information determined by taking account of transmission condition and a transmission rate of each channel.

Fifth, transmission condition detecting means for monitoring transmission condition of a plurality of channels and determining quality of the transmission condition of each channel, transmission rate detecting means for detecting a transmission rate demanded by each channel, and a maximum rate control information determining means for determining a maximum value of the transmission rate of each channel by taking account of results of the above-described transmission condition detecting means and transmission rate detecting means, and an indication from an operation of other user, are provided, and means for notifying each channel of a determination result of the maximum rate is provided.

Sixth, it is constructed of:
a voice coding device for coding voice;
a data packeting device for packeting a data signal sequence to a unit of radio signal transmission;
a variable rate communication path coding device for conducting error correction coding of a coded voice data and a packeted data in the above-described voice coding device and data packeting device, and an addition of the redundancy bit and matching processing of the transmission rate, and for conducting framing and slotting of a radio signal transmission unit of these both data, and communication path coding processing;
a voice/data packet switching device, arranged between the above-described voice coding device and data packeting device, and the variable rate communication path coding device, for selecting any of the voice data and the packeted data, and inputting it to the variable rate communication path coding device;
a continuous data content demand indicating device for obtaining continuous data content demand indicating information in order to transmit a continuous data content packeted in the above-described data packeting device to the base station;
a maximum rate controlling device for receiving maximum rate control information transmitted from the base station, and supplying a control signal to the above-described voice/data packet switching device and variable rate communication path coding device;
a modulation device for digitally modulating a signal communication-path-coded in the above-described variable rate communication path coding device; and
a transmission power controlling device for receiving transmission output power information from the above-described maximum rate controlling device, and controlling transmission power.

Seventh, it is constructed of:
a demodulation device for digitally demodulating a received signal through a transmitting and receiving antenna and a radio transmitting and receiving device;
a variable rate communication path decoding device for conducting communication path decoding processing in accordance with a transmission rate, such as reconstruction and error correction decoding of a frame, and matching of a transmission rate, from a received signal which is output from the above-described demodulation device and is slotted to a radio signal transmission unit;
a maximum rate designation information detecting device for extracting maximum rate designation information from an information header section of each frame of a signal output from the above-described variable rate communication path decoding device;
a maximum rate controlling device for receiving a detection result from the above-described maximum rate designation information detecting device, and outputting a predetermined control signal to a voice/data packet switching device and a variable rate communication path coding device of a receiving device;
an information source isolating device for isolating a signal in accordance with a difference of information sources, to which a voice/data packet and so forth after decoding outputted from the above-described variable rate communication path decoding device is time-multiplexed;
a voice decoding device for decoding a voice output of a data block isolated in the above-described information source isolating device; and
a continuous data assembling device for reconstructing a packeted reception data to a continuous data.

Eighth, it is constructed of:
a demodulation device for demodulating a signal of a corresponding channel from a received signal received through a transmitting and receiving antenna and a radio transmitting and receiving device, to which a plurality of channels are multiplexed;
a variable rate communication path decoding device for conducting communication path decoding processing in accordance with a transmission rate, such as reconstruction and error correction decoding of a frame, and matching of a transmission rate, from a received signal which is demodulated and is slotted to a radio signal transmission unit in the above-described demodulation device;
a transmission condition detecting device for detecting radio wave propagation condition and transmission condition of each communication path, based on an output signal demodulated in the above-described demodulation device;
a transmission rate detecting device for detecting a transmission rate of each channel and its error ratio, based on an output signal decoded in the above-described variable rate communication path decoding device; and
a maximum rate control information determining device for determining maximum rate control information of each channel, based on an output signal detected by the above-described transmission condition detecting device and transmission rate detecting device.

Ninth, it is constructed of:
a variable rate communication path coding device for conducting error correction coding for a signal of each channel, which is output from a maximum rate control information determining device for determining maximum rate control information of each channel, and an addition of the redundancy bit and matching processing of a transmission rate, and for conducting framing and slotting of a radio signal transmission unit, and insertion of control information such as the maximum rate control information, and for conducting communication path coding processing;
a modulation device for modulating an output signal which has been coded in the above-described variable rate communication path coding device; and
a multiplexing device for multiplexing a modulated signal of each channel, which has been modulated in the above-described modulation device.

This and other objects, features, and advantages of the present invention will become more apparent upon a reading of the following detailed description and drawings, in which:
Fig. 1 is a block diagram showing an arrangement of a transmitting and receiving apparatus on a mobile station side of one embodiment of the present invention;
Fig. 2 is a block diagram showing an arrangement of a transmitting and receiving apparatus on a base station side of one embodiment of the present invention;
Fig. 3 is a sequence chart diagram showing operation of one embodiment of the present invention and
Fig. 4 is a flowchart showing the method of deciding the maximum rate.

Embodiments of a data packet multi-access communicating method and a transmitting and receiving apparatus therefor in accordance with the present invention will be explained in detail by referring to drawings.

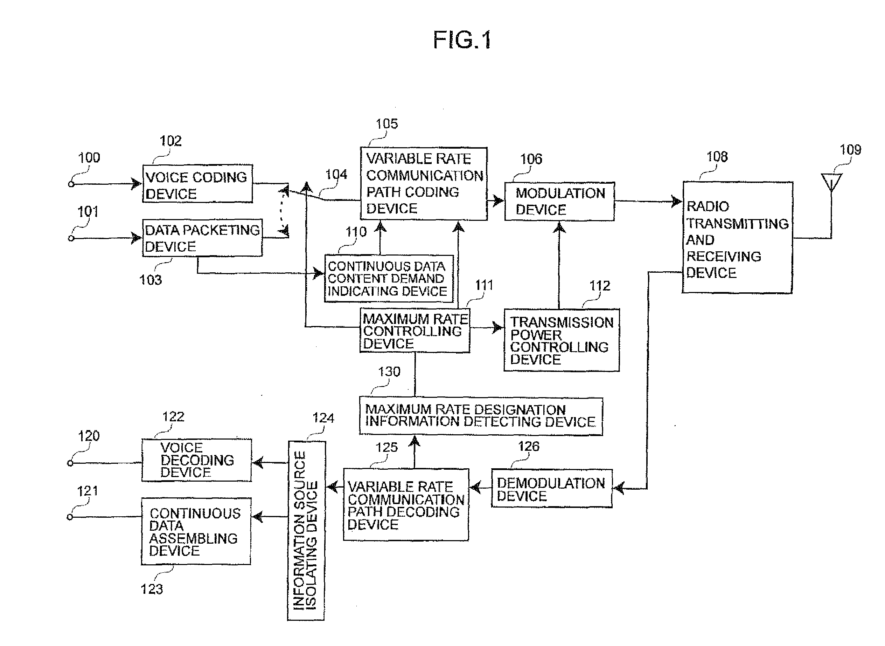

Referring to Fig. 1, an arrangement of the transmitting apparatus on a mobile station side will be explained.

It has an input terminal 100 for a signal such as signal transmission (voice signal transmission, for example) which is severe to a delay, and an input terminal 101 for a signal which accepts a delay of data transmission and so forth to some extent and has a severe demand to an error of the data transmission and so forth, and they have a voice coding device 102 (in the explanation view of this embodiment, an input from the input terminal 100 is voice.), a data packeting device 103 for packeting a data signal sequence to a unit of radio signal transmission, a voice/data packet switching device 104 for playing a role of switching an input to a variable rate communication path coding device 105 of a coded voice data and a packeted data in accordance with a switch signal from a maximum rate controlling device 111, and a variable rate communication path coding device 105 for conducting error correction coding, and an addition of the redundancy bit and matching processing of a transmission rate, and for managing communication path coding processing of framing and slotting of a radio signal transmission unit, respectively.

Also, the variable rate communication path coding device 105 adds continuous data content demand indicating information for demanding transmission of a continuous data content from the data packeting device 103 to an information transmitting header section, and is connected to a continuous data content demand indicating device 110 for providing its control information signal.

A modulation device 106 for digitally modulating a communication-path-coded signal is provided, and is connected to a transmission power controlling device 112 for controlling its transmission output power information.

Since, in the transmission power controlling device 112, determination of the transmission power is subject to a transmission rate, it is connected to the maximum rate controlling device 111.

An output from the modulation device 106 is coupled to a radio transmitting and receiving device 108 and a transmitting and receiving antenna 109 at an after stage.

Next, an arrangement of the receiving apparatus on a mobile station side will be explained.

A demodulation device 126 for digitally demodulating a received signal through the transmitting and receiving antenna 109 and the radio transmitting and receiving device 108 is connected.

An output from the demodulating device 126 is coupled to a variable rate communication path decoding device 125 for managing communication path decoding processing in accordance with a transmission rate, such as reconstruction of a frame, and error correction decoding and matching of a transmission rate, from a received signal slotted to a radio signal transmission unit.

The variable rate communication path decoding device 125 is connected to a maximum rate designation information detecting device 130 for extracting maximum rate designation information from an information header section of each frame, and a result of the detection is coupled as an input to the maximum rate controlling device 111 of a transmission side device.

A signal to which voice, a data packet and so forth after decoding from the variable rate communication path decoding device 125 are time-multiplexed is coupled to an information source isolating device 124 for conducting isolation due to a difference of information sources, and an output from a data block of voice is coupled to a voice decoding device 122, and the decoded voice is output from an output terminal 120.

Also, a packeted reception data is input to a continuous data assembling device 123 and output from an output terminal 121 as a data reconstructed so as to create continuous data.

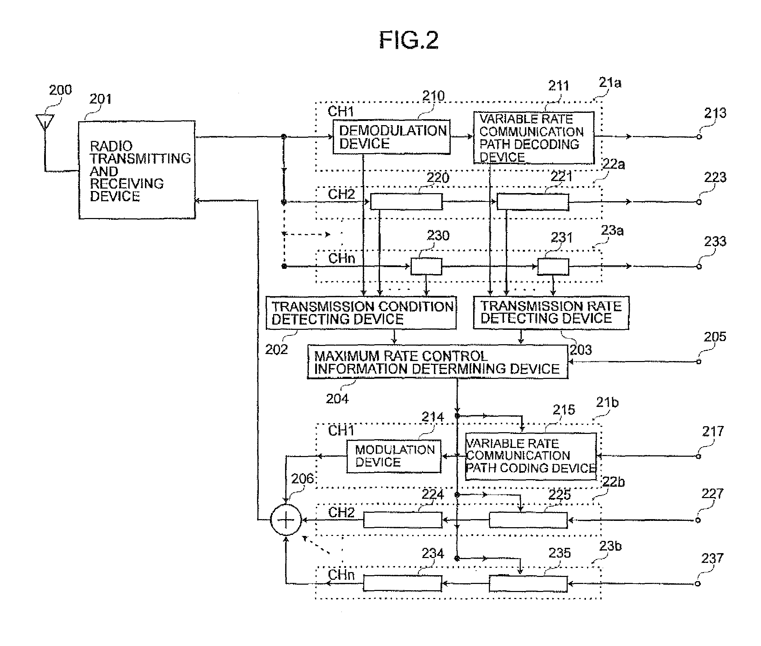

Referring to Fig. 2, an arrangement of the receiving apparatus on a base station side will be explained.

Received signals which are received through a transmitting and receiving antenna 200 and a radio transmitting and receiving device 201 and to which a plurality of channels are multiplexed are input to demodulation devices 210, 220 and 230 (CH1, CH2, CHn) for demodulating signals of respective corresponding channels.

Outputs from the demodulation devices 210, 220 and 230 are coupled to respective variable rate communication path decoding devices 211, 221 and 231.

Also, the respective demodulation devices 210, 220 and 230 are connected to a transmission condition detecting device 202 for detecting radio wave propagation condition and transmission condition of each communication path.

Also, the respective variable rate communication path decoding devices 211, 221 and 231 are connected to a transmission rate detecting device 203 for detecting a transmission rate of each channel (CH1, CH2, CHn) and its error ratio.

Further, the transmission condition detecting device 202 and the transmission rate detecting device 203 are connected to a maximum rate control information determining device 204 for determining maximum rate control information of each channel (CH1, CH2, CHn).

From output terminals 213, 223 and 233 which are connected to the variable rate communication path decoding devices 211, 221 and 231, respectively, signals are output after decoding.

Next, an arrangement of the transmitting apparatus on a base station side will be explained.

Signals of each channel (CH1, CH2, CHn) which are input from input terminals 217, 227 and 237 are input to variable rate communication path coding devices 215, 225 and 235 for conducting error correction coding, and an addition of the redundancy bit and matching processing of a transmission rate for each channel, and for managing framing and slotting of a radio signal transmission unit, and communication path coding processing such as insertion of control information of the maximum rate control information and so forth for each channel, and outputs from the respective variable rate communication path coding devices 215, 225 and 235 are coupled to modulation devices 214, 224 and 234, and modulated signals of each channel (CH1, CH2, CHn) are input to a multiplexing device 206, and are subject to multiplexing processing, and are transmitted to a mobile station through the radio transmitting and receiving device 201 and the transmitting and receiving antenna 200 at an after stage.

In addition, in this figure, 21a shows a received signal processing device of a channel 1, 21b shows a transmitted signal processing device of the channel 1. 22a shows a received signal processing device of a channel 2, 22b shows a transmitted signal processing device of the channel 2, 23a shows a received signal processing device of a channel n, and 23b shows a transmitted signal processing device of the channel n.

Next, referring to Fig. 1 and Fig. 2, operation of an embodiment of the data packet multi-access communicating method and the transmitting and receiving apparatus therefor in accordance with the present invention will be explained in detail.

Referring to Fig. 1. operation of the transmitting apparatus on the mobile station side will be explained.

A voice signal provided from the input terminal 100 is coded with respect to voice in the voice coding device 102.

A data signal other than voice, which is provided from the input terminal 101 is packeted for a unit of radio signal transmission and is stored in the data packeting device 103.

The stored data content information is inserted into a header section of an information transmission frame in the variable rate communication path coding device 105 through the continuous data content demand indicating device 110.

Signal from the voice coding device 102 and the data packeting device 103 are controlled by a switch signal from the maximum rate controlling device 111 in the voice/data packet switching device 104, and are input to the variable rate communication path coding device 105.

The variable rate communication path coding device 105 conducts error correction coding, and an addition of a redundancy bit and matching processing of a transmission rate in accordance with an information content of the input signal and a maximum rate provided from the maximum rate controlling device 111, and conducts communication path coding processing of framing and slotting of an actual data, control information and so forth in accordance with a transmitted signal format.

A signal communication-path-coded in the variable rate communication path coding device 105 is digitally modulated in the modulation device 106 for transmitting a digital signal as a radio signal.

The transmission power of the transmitted signal is input to the modulation device 106 through the transmission power controlling device 112 as transmission amplitude information in accordance with a maximum rate indicated by the maximum rate controlling device 111, and is output by radio from the transmitting and receiving antenna 109 through the radio transmitting and receiving device 108.

Next, referring to Fig. 1, operation of the receiving apparatus on the mobile station side will be explained.

A signal received through the transmitting and receiving antenna 109 and the radio transmitting and receiving device 108 is digitally demodulated in the demodulation device 126.

In the variable rate communication path decoding device 125, communication path decoding processing in accordance with a transmission rate, such as reconstruction of a frame, and error correction decoding and matching of a transmission rate, from a received signal slotted to a radio signal transmission unit, is applied to the demodulated reception signal.

Maximum rate designation information included at a predetermined position of an information header section in a reception format is extracted by the maximum rate designation information detecting device 130, and is input to the maximum rate controlling device 111 of the transmitting apparatus.

A signal sequence decoded in the variable rate communication path decoding device 125, to which voice and a data packet are multiplexed, is isolated in the information source isolating device 124, respectively, and a voice information sequence is input to the voice decoding device 122, and a decoded voice signal is output from the output terminal 120.

Also, in the information source isolating device 124, the data packet sequence is output from the output terminal 121 after it is reconstructed from a packet to a data block in the continuous data assembling device 123.

Next, referring to Fig. 2, operation of the receiving apparatus on the base station side will be explained.

Since a plurality of channels are multiplexed to signals received through the transmitting and receiving antenna 200 and the radio transmitting and receiving device 201, the signals are input to the demodulation devices 210, 220 and 230 of the respective channels through the respective corresponding channels (CH1, CH2, CHn), and are demodulated in the demodulation devices 210, 220 and 230 of the predetermined channels. And, the respective demodulated signals are input to the variable rate communication path decoding devices 211, 221 and 231. and are decoded and output from the output terminals 213, 223 and 233.

Also, in the demodulation devices 210, 220 and 230, measurement of a desired wave receiving level, an interference wave receiving level and so forth is conducted, and the respective information of each channel (CH1, CH2, CHn) is collected in the transmission condition detecting device 202.

Ranking is conducted in order of quality of the transmission condition of the channels (CH1, CH2, CHn) in the transmission condition detecting device 202, and a result of that is input to the maximum rate control information determining device 204.

Also, in the variable rate communication path decoding devices 211, 221 and 231, continuous data content demand indicating information of each channel (CH1, CH2, CHn), which is included at a predetermined position of an information header section in a reception format, is collected in the transmission rate detecting device 203.

In addition, information on whether or not resending is required based on an error ratio and so forth after decoding is also input to the maximum rate control information determining device 204 through the transmission rate detecting device 203.

Based on each information collected in the above-described manner, maximum rate information of each channel (CH1, CH2, CHn) is determined in the maximum rate control information determining device 204.

Next, referring to Fig. 2, operation of the transmitting apparatus on the base station side will be explained.

The information signals of each channel are input from the input terminals 217, 227 and 237, and the input signals of each channel (CH1. CH2, CHn) are decoded through the variable rate communication path coding devices 215, 225 and 235, respectively.

The maximum rate information for each channel (CH1, CH2, CHn), which were determined, respectively, in the above-described maximum rate control information determining device 204, is input to the variable rate communication path coding devices 215, 225 and 235, and here, the maximum rate information is inserted into a predetermined position of an information header section in a transmission format.

And, the coded, framed and slotted signals are digitally modulated in the modulation devices 214, 224 and 234 for every channel (CH1, CH2, CHn), and further, the modulated signals of each channel are multiplexed in the multiplexing device 206, and are transmitted to a mobile station through the radio transmitting and receiving device 201 and the transmitting and receiving antenna 200.

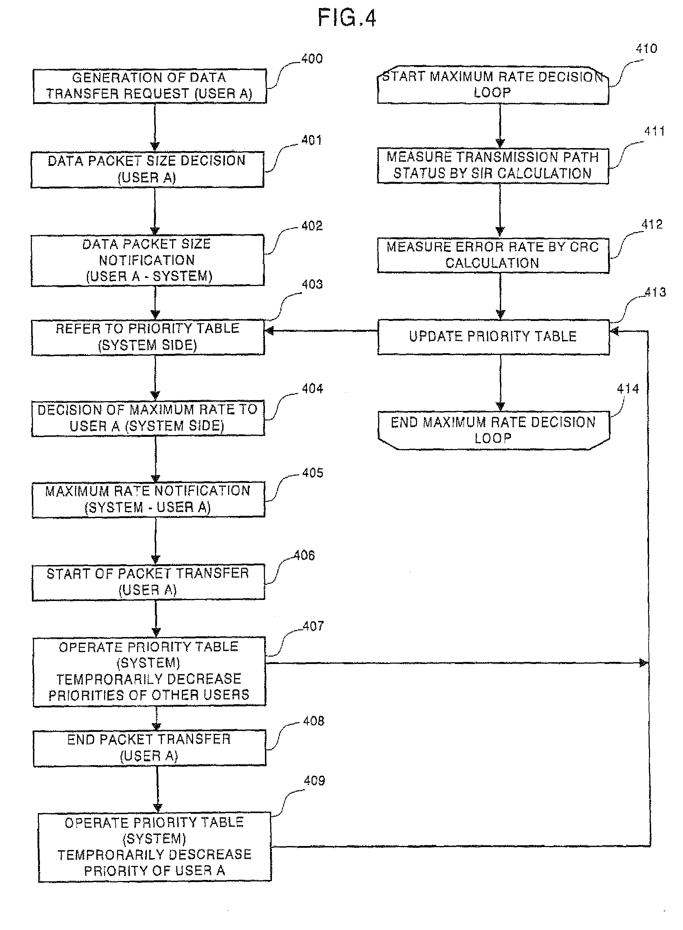

Here, the maximum rate deciding method will be explained by referring to Fig. 4.

When a user (hereinafter referred to as a user A) generates a data transfer request (step 400), the size of a data packet transmitted by the user A is decided (step 401). Then, the user A notifies the system of the data packet size (step 402).

The system collects transfer requests and transmission status results from plural users and utilizes them to decide the maximum rate.

The system always executes the procedure of deciding a maximum rate (a loop routing from the step 410 to the step 414). In the maximum rate decision procedure (a loop routing from the step 410 to the step 414), the transmission status detection device 202 calculates a SIR (Signal to Interference power Ratio) based on the carrier wave level and the interference wave level and then measures the transmission path status (the status of rf waves) (step 411). The transmission rate detection device 203 detects the current transmission rate of a channel and a data transfer packet size generated at the transmission rate. Moreover, the transmission rate detection device 203 measures the error rate with the CRC check bit added to information (step 412).

In the maximum rate decision procedure, the currently-measured rf status (SIR) of a user, a reception quality (error rate), the presence or absence of a data transfer request, and the size of a data transfer are used as decision materials. Theses decision materials are collected for all users. The priority table describing the priority of each user is updated based on the collected decision materials (step 413).

By referring to the priority table (step 403), the system decides information on maximum rates limiting each channel (step 404). The maximum rate decided here is notified respective channels (step 405).

When it is judged that the data size required by the user A agrees with an allowable maximum rate, the user A starts to transfer a data packet (step 406).

While the user A is transferring data packets, the system operates the priority table and decreases temporarily and forcibly the priorities of other users, thus creating an environment where packets of the user A can be transmitted by one operation (step 407).

When the data of the user A has been completely transferred (step 408), the system releases the priority of the user A (step 409). Thus, the system is ready to receive data from the user A with the next higher priority.

Furthermore, the process of updating the priority table will be explained in more detail.

Let us now consider that users A, B and C are issuing packet data transfer requests each having a different size, respectively.

If the packet size of the user A is 400k, the packet size of the user B is 30f1k, and the packet size of the user C is 200k, the system calculates what times each packet size is the data segment size of the system, for the respective users. It is assumed that the data segment size is 100k. In this case, the packet size of the user A corresponds to four times the data segment size, the packet size of the user B corresponds to three times the data segment size, and the packet size of the user C corresponds to twice the data segment size.

At the first stage, the priority is entered in a request order. Here, it is assumed that requests are made in the order of the users A, B, and C.

At the second stage, the priority order is decided whether or not the reception quality from each communication channel or control channel is OK or NG. If the reception qualities of all the users become OK, the request order is maintained without any change. Here, let us now assume that the users A and B are OK and the user C is NG and that the ranking is made in the order of the users A, B, and C on the priority table.

At the third stage, in order to control the priority order, it is decided whether or not the unit time average value of SIR already calculated reaches the threshold according to the above-mentioned data size. Since the data segment is 100k, the user A needs the four-fold time for the data transfer. For that reason, if the threshold cannot be satisfied because of the strict setting to the user A and the users B and C satisfy the threshold, the ranking is made in the order of users B, C and A on the priority table.

The system informs each user of the maximum rate of each channel, with reference to the priority table. In this example, the system indicates the three-fold rate to the user B to transmit data within a unit slot at a time. Meanwhile, in order to indicate a normal route to the users A and C, the system keeps the users A and C to transmit packets.

Immediately when the transmission from the user B has been completed, the user B is released from the priority order. Meanwhile, when the CRC (reception quality) of the user C becomes OK, the priority table is updated from the users A and C to the users C and A. Moreover, it is now assumed that the user B has again issued a transmission request.

Since the user B belongs to a request for the next slot, the priority order for the first entry becomes low. Thus, the first stage becomes final. Hence, the priority is ranked in the order of the users C, A, and B. The system indicates a two-fold rate to the user C.

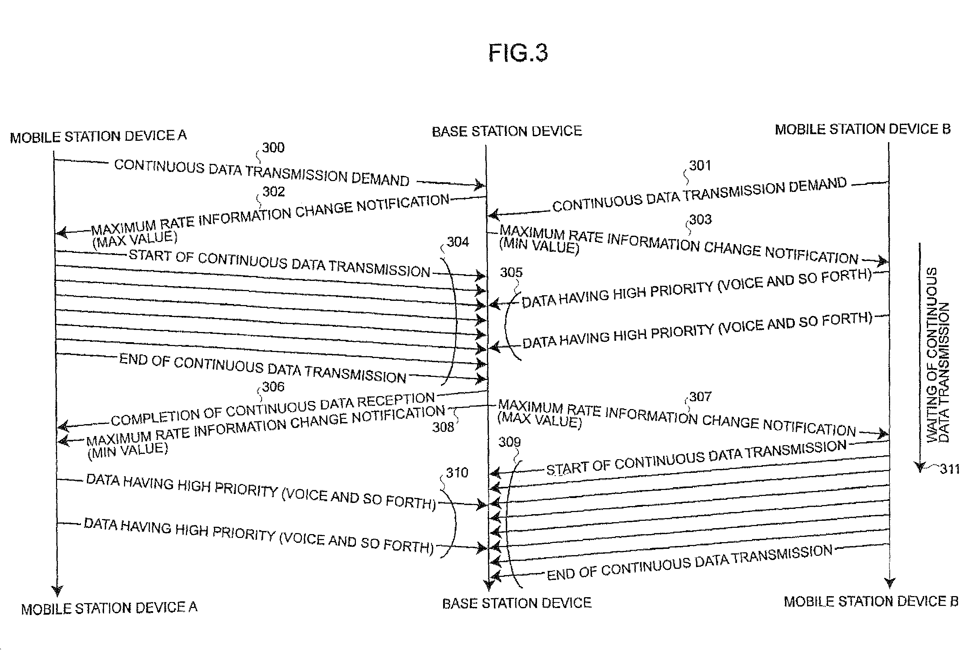

Fig. 3 is a sequence chart diagram showing operation of one embodiment of the present invention.

It is the sequence chart diagram showing the operation of condition in which a continuous data transmission demand is issued at almost the same time from a mobile station device A and a mobile station device B.

Here, it is assumed that the respective mobile station devices A and B demand transmission at a maximum rate 300, 301.

A base station device notifies the mobile station device A of a change of maximum rate information to a maximum value 302.

Also, the base station device notifies the mobile station device B of a change of the maximum rate information to a minimum value 303.

The mobile station device A transmits a continuous data at the indicated maximum rate 304.

The mobile station device B transmits a data having high priority (tentatively, it is voice and so forth, which needs real time transmission.) at a minimum rate 305.

The base station device gives notice of reception completion of a continuous data from the mobile station device A 306.

The base station device notifies the mobile station device A of a change of the maximum rate information to a minimum value 308.

Also, the base station device notifies the mobile station device B of a change of the maximum rate information to a maximum value 307.

The mobile station device B transmits a continuous data at the indicated maximum rate 309.

The mobile station device A transmits a data having high priority (tentatively, it is voice and so forth, which needs real time transmission.) at a minimum rate 310.

In this sequence, condition of waiting of continuous data transmission is occurring since the mobile station device B issued the continuous data transmission demand until the change of the maximum rate information to the maximum value is notified by the base station device 311.

In addition, in the above-mentioned embodiment, with respect to the maximum rate control information determining device 204 in Fig. 2, the present invention was explained as an embodiment in which the maximum rate of each channel is determined based on transmission condition for each channel (CH1, CH2, CHn) and required transmission rate information, and however, as other embodiment of the present invention, the following utilization method can be considered.

The method is for conducting determination of the maximum rate by adding an input signal to the maximum rate control information determining device 204, and adding an instruction signal from an operator to the input, and if this method is adopted, degree of freedom can be added to the determination of the maximum rate.

Thereby, without changing the devices of the mobile stations, advantages can be obtained, in which it becomes to be possible to realize to place restrictions on one channel and to increase and decrease a priority order for one channel based on a kind of a service under contract of a customer.

The first advantage is that, in random access, without controlling transmission timing and time slot, it is possible to realize demand assignment of a packet data, to reduce resending due to collision of a packet, and to improve a transmission efficiency of an entire system.

The reason thereof is as follows: with regard to reception by the base station of a signal in an upward direction of the CDMA cellular system, since communication for each mobile machine becomes to be asynchronous in response to a position where each mobile machine terminal exists, signals transmitted by the mobile machines are under condition that they are easy to interfere with each other.

Accordingly, with regard to transmission from the mobile machines to the base station, since each transmission becomes to be an interference signal, if resending and so forth of information is reduced as little as possible, a transmission efficiency of an entire system is enhanced.

Also, by conducting control of transmission from the base station to each mobile station, since it is possible to send a plurality of packets at a maximum rate one time when interference is less and radio wave condition is good, confirmation packets can be extremely less.

The second advantage is that, in accordance with control of the maximum rate on a mobile machine side, communication can be conducted at necessary and sufficient transmission power, and it means that consumption power can be reduced.

The reason thereof is that communication is conducted at minimum power necessary for non-erroneous data transmission by setting an optimum maximum transmission rate in which condition of a transmission path from the base station and transmission condition of other mobile stations are further taken into account in addition to the conventional method in which a transmission rate is reduced and transmission power is lowered.

Furthermore, resending of information for compensating an error becomes to be less, and also, unnecessary power consumption does not occur, and at the same time, it is possible to realize improvement of characteristic and performance, and to remarkably improve small-sizing, light-weighting, high-speeding, high-integrating, simplification of arrangements of a circuit and a device, and a transmission efficiency, and not only improvement of security but also other improvement of reliability and improvement of operability can be realized, and together, improvement of productivity and improvement of maintainability become to be possible, which sufficiently make reutilization of resources possible.

## Claims

1. A system for mobile data communication, said system comprising:
a mobile station for transmitting a data transfer request and a packet size of said data transfer request; and
a base station for calculating a signal to interference ratio of a channel between said mobile station and said base station and detecting an error rate of said channel, said channel being a channel over which communication with said base station is performed, said calculating and detecting being performed after said base station receives said data transfer request and said packet size of said data transfer request, said base station generating a notification signal based on said packet size, said signal to interference ratio and said error rate, and transmitting said notification signal to said mobile station, said mobile station determines a sending power based on said notification signal.

2. A method for mobile data communication, said method comprising:
transmitting a data transfer request and a packet size of said data transfer request, said transmission originating from a mobile station;
calculating a signal to interference ratio of a channel between said mobile station and a base station, said channel being a channel over which communication with said base station is performed;
detecting an error rate of said channel, said calculating and detecting being performed by said base station after said base station receives said data transfer request and said packet size of said data transfer request;
generating a notification signal by which said mobile station determines a sending power based on said packet size, said signal to interference ratio and said error rate, and transmitting said notification signal to said mobile station, said notification signal being generated by said base station; and
determining a sending power based on said notification signal, by said mobile station.

3. A base station for a mobile data communication system, said base station comprising:
means for receiving a data transfer request and a packet size of said data transfer request originating from a mobile station
means for calculating a signal to interference ratio of a channel between said mobile station and said base station, said channel being a channel over which communication with said base station is performed;
means for detecting an error rate of said channel, said calculating and detecting being performed by said base station after said base station receives a data transfer request and a packet size of said data transfer request; and
means for generating a notification signal based on said packet size, said signal to interference ratio and said error rate; and
means for transmitting said notification signal to said mobile station for use by said mobile station in determining a sending power.

4. A data packet multi-access communicating method comprising steps of:
transmitting a data size and a utilization demand of a maximum rate to a base station in case of transmitting continuous data in large quantities in mobile station side and
variably changing a transmission rate according to the maximum rate indicated by said base station in said mobile station side.

5. A data packet multi-access communicating method comprising steps of:
receiving a transmission demand from each mobile station in base station side,
determining a maximum rate for each mobile station at that time by taking account of radio wave propagation condition under which said each mobile station is presently situated, data size and a priority order in base station side and
notifying said each mobile station of said maximum rate in base station side.

6. A data packet multi-access communicating method comprising steps of:
transmitting a data size and a utilization demand of a maximum rate to a base station in case of transmitting continuous data in large quantities in mobile station side, receiving said data size and said utilization demand from each mobile station in base station side,
determining a maximum rate for said each mobile station at that time by taking account of radio wave propagation condition under which said each mobile station is presently situated, said data size and a priority order in base station side,
notifying said each mobile station of said maximum rate in base station side and
variably changing a transmission rate according to said maximum rate indicated by said base station in said mobile station side.

7. A transmitting apparatus on a mobile station side comprising:
variable rate communication path coding means for coding an information signal at a transmission rate in accordance with an information content,
modulation means for modulating a signal at transmission power in accordance with said transmission rate and
maximum rate controlling means for controlling a maximum value of the transmission rate to said variable rate communication path coding means, in accordance with maximum rate information determined by taking account of transmission condition and a transmission rate of each channel.

8. A receiving and transmitting apparatus on a base station side comprising:
transmission condition detecting means for monitoring transmission condition of a plurality of channels and determining quality of the transmission condition of each channel,
transmission rate detecting means for detecting a transmission rate demanded by each channel,
a maximum rate control information determining means for determining a maximum value of the transmission rate of each channel by taking account of results of said transmission condition detecting means and transmission rate detecting means, and an indication from an operation of other user and
notifying each channel of a determination result of the maximum rate.

9. A receiving and transmitting apparatus on a mobile station side coprising:
a voice coding device for coding voice;
a data packeting device for packeting a data signal sequence to a unit of radio signal transmission;
a variable rate communication path coding device for conducting error correction coding of a coded voice data and a packeted data in said voice coding device and data packeting device, and an addition of the redundancy bit and matching processing of the transmission rate, and for conducting framing and slotting of a radio signal transmission unit of these both data, and communication path coding processing;
a voice/data packet switching device, arranged between said voice coding device and data packeting device, and the variable rate communication path coding device, for selecting any of the voice data and the packeted data, and inputting it to the variable rate communication path coding device;
a continuous data content demand indicating device for obtaining continuous data content demand indicating information in order to transmit a continuous data content packeted in said data packeting device to the base station;
a maximum rate controlling device for receiving maximum rate control information transmitted from the base station, and supplying a control signal to said voice/data packet switching device and variable rate communication path coding device;
a modulation device for digitally modulating a signal communication-path-coded in said variable rate communication path coding device; and
a transmission power controlling device for receiving transmission output power information from said maximum rate controlling device, and controlling transmission power.

10. A receiving and transmitting apparatus on a mobile station side comprising:
a demodulation device for digitally demodulating a received signal through a transmitting and receiving antenna and a radio transmitting and receiving device;
a variable rate communication path decoding device for conducting communication path decoding processing in accordance with a transmission rate, such as reconstruction and error correction decoding of a frame, and matching of a transmission rate, from a received signal which is output from said demodulation device and is slotted to a radio signal transmission unit;
a maximum rate designation information detecting device for extracting maximum rate designation information from an information header section of each frame of a signal output from said variable rate communication path decoding device;
a maximum rate controlling device for receiving a detection result from said maximum rate designation information detecting device, and outputting a predetermined control signal to a voice/data packet switching device and a variable rate communication path coding device of a receiving device;
an information source isolating device for isolating a signal in accordance with a difference of information sources, to which a voice/data, packet and so forth after decoding outputted from said variable rate communication path decoding device is time-multiplexed;
a voice decoding device for decoding a voice output of a data block isolated in said information source isolating device; and
a continuous data assembling device for reconstructing a packeted reception data to a continuous data.

11. A receiving and transmitting apparatus on a base station side according to claim 8. **characterized in that** the apparatus is constructed of:
a demodulation device for demodulating a signal of a corresponding channel from a received signal received through a transmitting and receiving antenna and a radio transmitting and receiving device, to which a plurality of channels are multiplexed;
a variable rate communication path decoding device for conducting communication path decoding processing in accordance with a transmission rate, such as reconstruction and error correction decoding of a frame, and matching of a transmission rate, from a received signal which is demodulated and is slotted to a radio signal transmission unit in said demodulation device;
a transmission condition detecting device for detecting radio wave propagation condition and transmission condition of each communication path, based on an output signal demodulated in said demodulation device;
a transmission rate detecting device for detecting a transmission rate of each channel and its error ratio, based on an output signal decoded in said variable rate communication path decoding device; and
a maximum rate control information determining device for determining maximum rate control information of each channel, based on an output signal detected by said transmission condition detecting device and transmission rate detecting device.

12. A receiving and transmitting apparatus on a base station side comprising:
a variable rate communication path coding device for conducting error correction coding for a signal of each channel, which is output from a maximum rate control information determining device for determining maximum rate control information of each channel, and an addition of the redundancy bit and matching processing of a transmission rate, and for conducting framing and slotting of a radio signal transmission unit, and insertion of control information such as the maximum rate control information, and for conducting communication path coding processing;
a modulation device for modulating an output signal which has been coded in said variable rate communication path coding device; and
a multiplexing device for multiplexing a modulated signal of each channel, which has been modulated in said modulation device.
